# EUROPEAN PATENT APPLICATION

(11) **EP 2 028 221 A1**
(43) Date of publication of application: **25.02.2009**
(21) Application number: 08012805.1
(22) Date of filing: 16.07.2008
(51) Int. Cl.: C08J 5/14, F16D 69/02

(54) **Friction material with silicon**

(30) Priority: 03.08.2007 US 953922 P
(71) Applicant: BorgWarner, Inc., Auburn Hills, MI 48326-2872 (US)
(72) Inventor: Dong, Feng, Rochester MI 48306 (US); Xu, Lanhong, San Ramon CA 94583 (US)
(74) Representative: Leckel, Ulf

(57) **Abstract**

One embodiment includes a product including a friction material including a mat including a plurality of fibers including carbon fibers, and a silicon component including at least one of silicon carbide, silica, silicon or other silicon-based compounds.

## Description

### CROSS-REFERENCE TO RELATED APPLICATIONS

This application claims the benefit of U. S. Provisional Application No. 60/953,922, filed August 3, 2007.

### TECHNICAL FIELD

The field to which the disclosure generally relates includes friction materials and methods of making and using the same.

### BACKGROUND

In the manufacture of composite materials, for example as used in automotive clutches, one or two layers of a carbon fiber fabric have heretofore been subjected to a carbon infiltration process. Sometimes the fabric is infiltrated with a carbonizable thermosetting resin and heated in a furnace under a suitable atmosphere to carbonize the resin. Generally, the fabric is placed in a furnace and the furnace is evacuated of air and heated to about 1900°F or so. A carbonous gas, typically natural gas or methane, is flowed around the fabric. The gas decomposes to deposit carbon (pyrolytic carbon) in the fabric. This is known as a chemical vapor deposition (CVD) process. The carbon infiltration process is continued and repeated until a composite of specified density and porosity is obtained. The friction surface of the composite is usually machined with a surface grinder to remove high spots from the infiltrated fabric. However, for some applications such carbon fiber and carbon matrix composites do not have a sufficiently high enough coefficient of friction.

### SUMMARY OF EXEMPLARY EMBODIMENTS OF THE INVENTION

One embodiment of the invention includes a product comprising a friction material comprising a mat comprising a plurality of fibers, the fibers comprising a core and a layer thereon consisting essentially of carbon, and a friction modifying component on the layer, the friction modifying component comprising at least one of a silicon component, a metal, a metal oxide or a ceramic material.

Other exemplary embodiments of the invention will become apparent from the detailed description provided hereinafter. It should be understood that the detailed description and specific examples, while disclosing exemplary embodiments of the invention, are intended for purposes of illustration only and are not intended to limit the scope of the invention.

### BRIEF DESCRIPTION OF THE DRAWINGS

Exemplary embodiments of the invention will become more fully understood from the detailed description and the accompanying drawings, wherein:
FIG. 1 illustrates a method of making a friction material according to one embodiment of the invention.
FIG. 2 illustrates a microphotograph of a plurality of fibers useful in various embodiments of the invention.
FIG. 3A illustrates a microphotograph of fibers useful in the present invention without any friction modifying component coating thereon.
FIG. 3B illustrates a photomicrograph of a plurality of fibers having a silicon carbide coating thereon evidenced by a plurality of particles or conglomeration of particles on the fibers.
FIG. 4 illustrates a photomicrograph of fibers according to one embodiment of the invention.
FIGS. 5A-5F, are graphs of results of comparative evaluations conducted with friction materials including fibers without a friction modifying component (FIGS. 5A-5B), and fibers with silicon carbide as the friction modifying component (FIGS. 5C-5F).
FIGS. 6A-6B are graphs of the results of comparative durability tests.

### DETAILED DESCRIPTION OF EXEMPLARY EMBODIMENTS

The following description of the embodiment(s) is merely exemplary in nature and is in no way intended to limit the invention, its application, or uses.

Friction materials according to various embodiments of the invention may be used in a variety of applications including, but not limited to, clutch plates, transmission bands, brake shoes, synchronizer rings, friction disk or system plates.

One embodiment of the invention includes a friction material which may include a plurality of fibers which may include at least one of ceramic fibers, carbon fibers, or polymeric fibers. The friction material may also include a silicon component which may be added in an amount sufficient to improve the friction performance of the material such as the frictional level, µ-v and/or wear. The silicon component may include silicon carbide, silica, silicon or other silicon-based compounds. The silicon component may be applied to the surface of the friction material using coating, saturation/carbonization and silicon infiltration methods. Alternatively, silicon-containing fibers can also be used in the silicon material construction before the friction material undergoes a chemical vapor deposition process or carbonization.

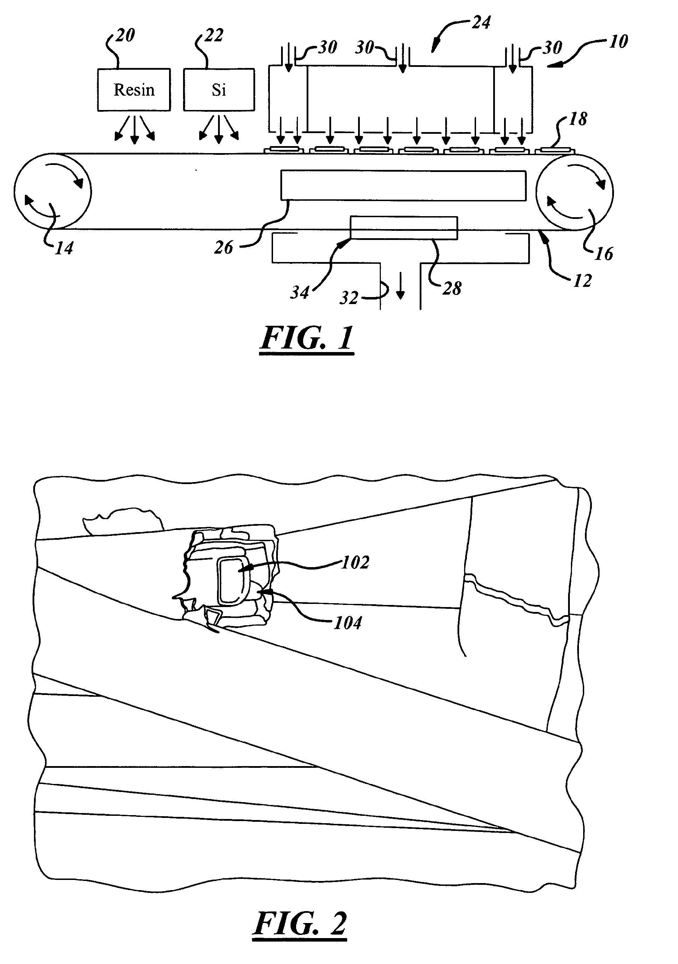

Referring now to FIG. 1, a friction material according to one embodiment of the invention may be manufactured utilizing a system 10 which may include a conveyor belt 12 which travels in a circular fashion with the aid of rollers 14 and 16. A plurality of friction material mats 18 may be placed on the conveyor belt 12 and travel through a number of process stations.

In one embodiment of the invention a resin station 20 may be provided to deposit a carbonous base resin onto the friction material mat 18 as desired. A variety of carbon-based resins may be utilized as described hereafter. A second process station 22 may be utilized to deposit a silicon component onto the surface of the friction material mat 18. As described above the silicon component may include particles of silicon carbide, silica, or other silicon-based compounds or may be a coating including silicon.

The system 10 may also include a chemical vapor deposition reactor 24 which may include a plurality of gas inlet ports 30 for introducing process gas and inert gases to the reactor and constructed and arranged to deposit a film of material onto the friction material mat. The deposited material may be carbon-based, if desired, and/or may be the silicon component in addition to or as an alternative to depositing silicon-based particles from station 22. To deposit the silicon component any of a number of variety of silicon-containing gas may be utilized including, but not limited to, SiH₄, SiH₃, SiH₂, SiH, or tetra-ethyl-oxy-silane (TEOS (Si(OC₂H₅)₄). Alternatively, a silicon containing gas and a carbon containing gas such as methane or natural gas may be introduced into the reactor to deposit carbon, silicon and/or silicon carbide on the carbon fibers.

The reactor system 24 may also include a heater 26 to heat the friction material mat 18 and the resin thereon or to carbonize such resin. An exhaust port 32 may be provided as well as a belt cleaning station 34. Although an atmospheric pressure chemical vapor deposition process is illustrated in FIG. 1, a low pressure chemical vapor deposition process or plasma-enhanced chemical vapor deposition process may also be utilized.

The silicon containing material deposited by chemical vapor deposition may be deposited onto the surfaces of the fibers or into pores thereof. The silicon containing material may also be deposited into the interstices between fibers but not so much as to block the flow of fluids therethrough. The silicon component may be present in an amount of at least 0.5 weight percent of the total weight of the friction material mat 18. In another embodiment the silicon component may be present in an amount ranging from about 0.5 to about 10 weight percent of the total weight of the friction material mat 18.

The friction material may also include the following additional components.

### Carbon Based Fibers

In one embodiment of the invention, the friction material may include a carbon-based fiber, for example, a petroleum pitch-based carbon fiber comprising a solvated pitch which has a fluid temperature of at least 40°C lower than the melting point of the same pitch in the nonsolvated state. The petroleum pitch-based fibers are capable of being heated to carbonization temperatures without melting.

In other embodiments, the petroleum pitch-based carbon fibers can be used as a second layer on a fibrous base material which includes further petroleum pitch-based carbon fibers in the fibrous base material.

In yet another embodiment, the petroleum pitch-based carbon fibers are used as a secondary or top layer on an outer surface of a fibrous base material that has no petroleum pitch-based carbon fibers in the fibrous base material. The friction materials having the petroleum pitch-based carbon fiber increases the break away coefficient of friction, thus increasing the holding capacity of the friction material.

In certain embodiments, the petroleum pitch-based carbon fiber can be used as a top or secondary layer on an inexpensive porous material comprising, for example cotton and cellulose filler material. The small diameter fibers may be present in a typical formulation such as in the range of about 15 to about 20%, by weight.

In certain embodiments, the carbon fiber is made from a solvated isotropic pitch which has a fluid temperature of at least about 400°C lower, and often 200°C or more, than the melting point of the same pitch in the non-solvated state. Fibers made from this solvated isotropic pitch have desirable improved stabilization characteristics such that the fibers can be heated to carbonization temperatures without melting. Further, any mesophase present in the carbon fibers is not highly elongated by shear forces associated with the formation of the carbon fibers. Further, petroleum pitch-based carbon fibers may have about 5 to about 40% solvent, by weight, where the pitch fiber is unmeltable upon removable of the solvent from the fiber.

The petroleum pitch-based carbon fibers may have a softening point in excess of 300°C and preferably greater than 350°C such that the fibers are capable of being subjected to a stabilization process at temperatures greater than a fibrous spinning temperature.

The term "pitch" generally refers to by-products in the production of natural asphalt petroleum pitches and heavy oil obtained as a by-product in naphtha cracking industry and pitches of high carbon content obtained from coal. Petroleum pitch generally refers to the residual carbonaceous material obtained from the catalytic and/or thermal cracking of petroleum distillates or residues. Solvated pitches generally contain between about 5 to about 40% by weight of solvent in the pitch and have a fluid temperature lower than the melting point of a pitch component when not associated with solvent.

Typically the fluid temperature is lower than about 40°C. The fluid temperature for a solvated pitch is generally determined in the industry to be the temperature at which the viscosity of 6000 poise is registered upon cooling the solvated pitch at 1 °C per minute from a temperature in excess of its melting point. The solvent content refers to a value determined by weight loss on vacuum separation of the solvent. In one embodiment of the invention the fiber consisting essentially of carbon is present in about 10 to about 20% by weight of the friction material. In one embodiment the carbon based fiber is a fiber comprising graphite. Alternatively, PAN based carbon fibers may be used.

### Mineral Based Fibers

In one embodiment of the invention, the friction material may include mineral fibers. The mineral fibers may have a relatively small diameter. These fibers may be made from vitreous melt, such as rock, slag, glass or other mineral melts. The melt is generally formed by blending rocks or minerals to give the desired analysis. The mineral composition often has an analysis, as oxides, which includes at least 32% SiO₂, below 30% Al₂O₃ and at least 10% CaO.

In one embodiment of the invention the mineral fibers include engineered mineral fibers from Lapinus having a fiber diameter ranging from 5 to 10 micrometers. The mineral fibers may be used to produce friction materials having larger pores and demonstrate better material properties as shown by the following measurements.

| Sample | Porosity= % | Median Pore Diameter (Uolume)= µm | Bulk Density at 0.42 psia g/mL | Apparent (skeletal) Density= g/mL | Total Intrusion Volume= mL/g | Threshold Pressure: psia |
|---|---|---|---|---|---|---|
| Control | 60.17 | 5.80 | 0.6768 | 1.6990 | 0.8889 | 5.47 |
| BW | 67.16 | 12.04 | 0.5749 | 1.7503 | 1.1682 | 11.78 |
| BW | 63.68 | 10.28 | 0.5935 | 1.6340 | 1.0729 | 6.07 |

Typically small diameter mineral fibers may be used in the friction material according to one embodiment of the invention and may have the following properties.

| | | |
|---|---|---|
| Parameter | Ranges | Actual |
| Mineral Fiber diameter (um) | Less than 20 | 5-10 |
| Mineral Fiber Length (mm) | 0.05 to 6 | 0.2-0.7 |
| Mineral Fiber modulus (Gpa) | | |
| Fiber(all)/filler(diatom) ratio | 0.8-9 | 71/19 = 3.74 |
| Filler (diatom) range | 10-50 | 19 |
| Surface treatment | Silane, Cationic | |
| Max short (%) | | 0.20% |

An engineered mineral fiber from Lapinus Fibers used in another embodiment had the following properties: treated with surfactant for good water dispersion designed for wet paper process (gasket application) fiber diameter: <10 µm; Length: 650.+-.150 µm.

Another engineered mineral fiber from Lapinus Fiber used in another embodiment of the invention had the following properties: treated with silane coupling agent for good bonding to phenolic resin designed for brake application short fiber length for easy mixing (no drawings) fiber diameter: <10µm; Length 230.+-.50 µm.

The fiber diameter of the small diameter mineral fibers may in various embodiments range from 5 to 10 micrometers, or about 5 micrometers to 7 micrometers. The tensile modulus of the small diameter fibers may range from 200 to 300 GPa or 250 to 300 GPa in selective embodiments.

In one embodiment the mineral fiber may include SiO₂ at 38 %wt -43 %wt, Al₂O₃ at 18 %wt - 23 %wt, CaO+MgO at 23 %wt- 28 %wt, FeO at 4.5 %wt 8 %wt, K₂O+Na₂O at 4.5 %wt, and other ingredients up to 6 %wt. In another embodiment the mineral fibber may include SiO₂ at 34 to 52 %wt, Al₂O₃ at 5 to 15 %wt, CaO at 20 to 43 %wt, MgO at 4 to 14%wt, Na₂O at 0 to 1 %wt, K₂O at 0 to 2 %wt, TiO₂ at 0 to 1 %wt, FeO₂ at 0 to 2 %wt, and oher ingredients at 0 to 7 %wt.

### Other Fibers

While the preferred other fibers are carbon fibers, aramid fibers, cellulose fibers, ceramic fibers and silica fibers, other inorganic fibers may be employed. Other useful inorganic filaments for use in various embodiments of the invention may include glass fibers such as fibers formed from quartz, magnesia alumuniosilicate, non-alkaline aluminoborosilicate, soda borosilicate, soda silicate, soda lim-aluminosiliate, lead silicate, non-alkaline lead boroalumina, non-alkaline barium boroalumina, non-alkaline zinc boroalumina, non-alkaline iron aluminosilicate, cadmium borate, alumina fibers, and the like. In some embodiments, the other fibers may have a fiber diameter larger than 20 micrometers.

In one embodiment small diameter fibers may be present on an outer surface of the fibrous base material as the friction material. The friction material typically is for use in engagement with an opposing friction surface. The fibrous base material thus, in contact with the opposing friction surface during the engagement of the friction material with the opposing friction surface. The fibers also may be present in the opposing friction surface. The wet friction material also may comprise a plurality of fibrous base materials with the small diameter fibers being present in any of the layers of the plurality.

### Additives

Various types of friction modifying particles may be useful in the friction material. Useful friction modifying particles include silica particles. Other embodiments may have friction modifying particles such as resin powders such as phenolic resins; silicone resins epoxy resins and mixtures thereof. Still other embodiments may include partial and/or fully carbonized carbon powders and/or particles and mixtures thereof; and mixtures of such friction modifying particles. In certain embodiments as described herein, silica particles such as diatomaceous earth, Celite®, Celatom®, and/or silicon dioxide may be useful. The silica particles are inexpensive inorganic materials which bond strongly to the base material. The silica particles provide high coefficients of friction to the friction material. The silica particles also provide the base material with a smooth friction surface and may provide a good "shift feel" and friction characteristics to the friction material such that any "shudder" is minimized.

Typically, the wet friction material includes friction modifying particles deposited on a surface of the base material. Preferably, the particles are synthetic graphite. Inorganic fillers also may be used. The inorganic filler varies broadly and generally is diatomaceous earth, clay, wollastonite, silica, carbonate; vermiculite, mica, silica oxides, iron oxides, aluminum oxides, titanium oxides and the like; silica nitrides, iron nitrides, aluminum nitrides, titanium nitrides and the like; and, silica carbides, iron carbides, aluminum carbides, titanium carbides and the like. The particles may have a Mohs hardness of at least 4.5.

### Binders And Impregnating Agents

Various resins may be used in embodiments of the invention. The resin may include but is not limited to, phenolic or phenolic based resins. In one embodiment, the saturant material may comprise about 45 to about 65 parts, by weight, per 100 parts, by weight, of the friction material. In one embodiment the phenolic-based resins which include in the resin blend other modifying ingredients, such as epoxy, butadiene, silicone, tung oil, benzene, cashew nut oil and the like. In the phenolic-modified resins, the phenolic resin may be generally present at about 50% or greater by weight (excluding any solvents present) of the resin blend. However, it has been found that friction materials, in certain embodiments, can be improved when the mixture includes a resin blend containing about 5 to about 80%, by weight, and for certain purposes, about 15 to about 55%, and in certain embodiments about 15 to about 25%, by weight, of silicone resin based on the weight of the silicone-phenolic mixture (excluding solvents and other processing acids).

Another embodiment of the invention may include an epoxy modified phenolic resin which contains about 5 to about 25 percent, by weight, and about 10 to about 15 percent, by weight, of an epoxy compound with the remainder (excluding solvents and other processing aids) phenolic resin. The epoxy-phenolic resin compound may provide higher heat resistance to the friction material than the phenolic resin alone.

In other embodiments the binder may be a phenolic or modified phenolic resin, a silicone or modified silicone resin, or a blend of a phenolic or modified phenolic resin with a silicone or modified silicone resins. In one embodiment, the binder is an epoxy modified phenolic resin. The wet friction material may be used as , for example but not limited to, a clutch facing or a brake lining. In one embodiment, the wet friction material comprises 10 to 70 weight percent fibers, 10 to 70 weight percent inorganic filler and 20 to 60 weight percent binder.

In still other embodiments of the invention, organo-silane binders may be used on the fibers of this invention. Most organofunctional alkoxysilanes have specific technical applications such as adhesion promoters and surface modification agents. For example, 3-aminopropyltrialkoxysilanes, 3-aminopropylmethyldialkoxysilanes, N-aminoethyl-3-aminopropyltrimethoxysilane. N-aminoethyl-3-aminopropyl-meththyldiamethoxysilane, 3-ercaptopropyltrimethorxysilane and 3-methaoxypropyltrimethoxysilane are used as adhesion promoters or as surface modification agents. Compounds such as 3-aminoisobutyltrialkoxysilanes, 3-aminoisobutylmethyldiakloxysilanes, N-(2-aminoethyl)-3-amino-2-methylpropylalkoxysilanes and N-(2-aminoethyl) 3-amino-2-methylpropylmethyidialkoxysilanes are also known.

In another embodiment, the friction material may be made with a phenol-formaldehyde resin as a curable binder. The phenol-formaldehyde resin contains both phenol and formaldehyde in a molar ratio of 1:2.8 and more, such as up to 1:5. In general the quantity of formaldehyde is over the stoichiometric amount such as in the ratio 1:3.1 to 1:5, for instance 1:3.4. The excess of formaldehyde avoids the possibility of phenol remaining presenting in gaseous form. Other compounds such as ammonia and sugar may be used in preparing the phenolic binder.

The friction material also may be impregnated using different resin systems. In certain embodiments, at least one phenolic resin, at least one modified phenolic-based resin, at least one silicone resin, at least one modified epoxy resin, and/or combinations of the above may be used. In certain other embodiments, a silicone resin blended or mixed with a phenolic resin in compatible solvents is useful.

The high pressure oiled environment may be greater than 5MPa and more preferably greater than 6MPa. The friction modifying particles preferably have a Mohs hardness of at least 4.5. In one embodiment, the ratio of small diameter fibers to fillers may range from 0.5/1 to 2.0/1, and in another embodiment the ratio may range from 0.8/1 to 1.4/1. The fibrous base material also includes a binder. In one embodiment, the fibrous base material comprises 20 to 60 weight percent of the small diameter fibers, and in another embodiment the fibrous base material comprises 30 to 50 weight percent of the small diameter fibers.

The resin mixture may comprise desired amounts of the resin and the friction modifying particles such that the target pick up of resin by the fibrous base material ranges from about 25 to about 70%, in other embodiments, from about 45 to about 200%, and, in certain embodiments, about 60 to at least 65%, by weight, total silicone-phenolic resin. After the fibrous base material is saturated with the resin, the fibrous base material is cured for a period of time (in certain embodiments for about 1/2 hour) at temperatures ranging between 300-400°C to cure the resin binder and form the friction material. The final thickness of the friction material depends on the initial thickness of the fibrous base material.

The friction material according to one embodiment of the invention may include a layer of friction modifying particles on a top surface of a fibrous base material provides a friction material with good anti-shudder characteristics, high resistance, high coefficient of friction, high durability, good wear resistance and improved break-in characteristics.

The friction material further comprises a top, or second, layer of the regular geometrical shaped friction modifying particles on a first, or top, surface of the base material. The presence of the friction modifying materials as a top layer on the base material provides the friction material with many advantageous properties, including good oil retention and surface oil flow properties.

FIG. 2 illustrates is a microphotograph of a plurality of fibers useful in various embodiments of the invention. The each fiber 100 includes a core 102 which may be any fiber including a carbon-based fiber, mineral-based fiber or other fibers as described herein. The core 102 includes a layer 104 thereon which consists essentially of carbon. In FIG. 2, the layer 104 was deposited by chemical vapor deposition. However, the layer 104 may be formed on the core 102 by coating the core 102 with an organic resin and carbonizing the resin, for example, by heating the resin in a furnace or a reactor. In one embodiment, a friction modifying component may be mixed in with the resin prior to heating the resin in the furnace or reactor. In another embodiment the friction modifying component may be deposited on the core first and then the resin is deposited thereon, or in yet another embodiment the friction modifying component may be deposited on the resin that is on the core 104. In another embodiment, the friction modifying component may be deposited on the layer 104 after the layer 104 has been carbonized or deposited by other methods such as chemical vapor deposition as described herein. In one embodiment, the friction modifying component is heated to form particles or a coating completely or partially covering the layer 104 or to infiltrate the fiber 100. In another embodiment, the friction modifying component may react with the material in the layer 104 or the core 102. The friction modifying component may include a silicon component, a metal, a metal oxide or a ceramic material. In one embodiment, the friction modifying component is present in an amount equal to or less than 20% of the weight of the fiber core and layer 104. In another embodiment, the friction modifying component is present in an amount equal to or less than 10% of the core 102 and layer 104. In another embodiment, the friction modifying component is present in an amount ranging from 0.05 weight percent to 2 weight percent of the core 102 and layer 104.

In one embodiment of the invention, the friction material has a porosity greater than 40%. In another embodiment, the friction material has a porosity ranging from 60% to 90%.

In one embodiment, the fibers may include at least one of continuous fibers or spun yarn, and may be woven or non-woven. The friction modifying component may be provided on the layer 104 as a coating completely coating the fiber 100 or a coating which is partially provided on the fiber, leaving other portions not coated by the friction modifying component. In one embodiment, the friction modifying component is distributed throughout the thickness of the mat. In another embodiment the majority of the friction modifying component is not at an upper surface of the mat.

In one embodiment, the friction modifying component may be first deposited on the core 102 and thereafter, a carbon containing material may be deposited on the friction modifying component, for example, by chemical vapor deposition or by depositing a resin using any method known to those skilled in the art, including spraying, rolling, brushing, dipping and the like. In one embodiment, the weight percent pickup of the resin with or without the friction material component may range from 30-20% of the weight of the core 102.

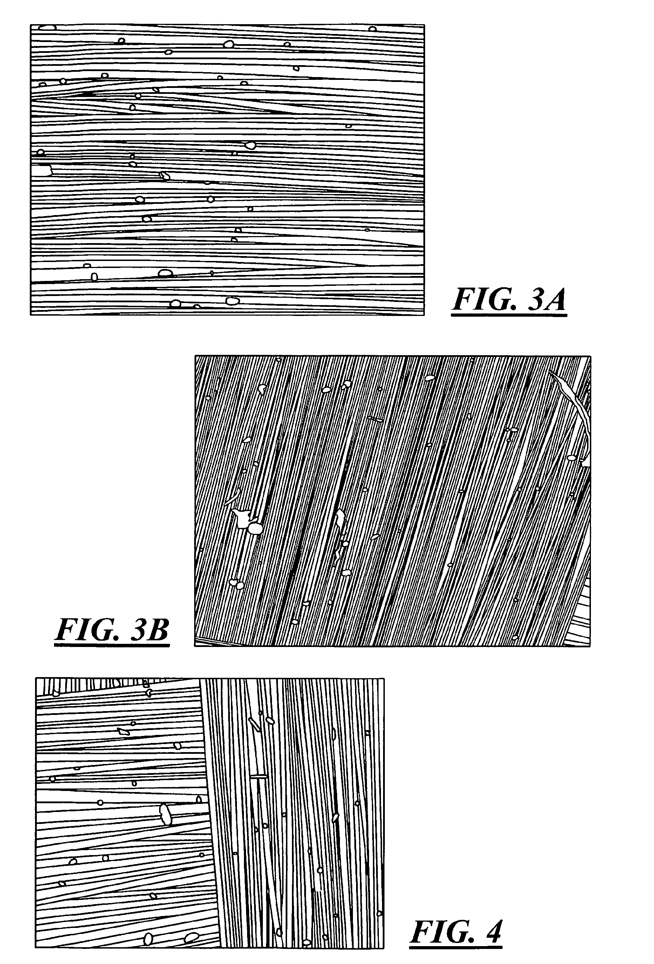

FIG. 3A illustrates a microphotograph of fibers useful in the present invention without any friction modifying component coating thereon.

FIG. 3B illustrates a photomicrograph of a plurality of fibers having a silicon carbide coating thereon evidenced by a plurality of particles or conglomeration of particles on the fibers.

FIG. 4 illustrates a photomicrograph of fibers according to one embodiment of the invention. Silicon carbide coating is evident on the fibers by a plurality of particles or a conglomeration of particles on the fibers.

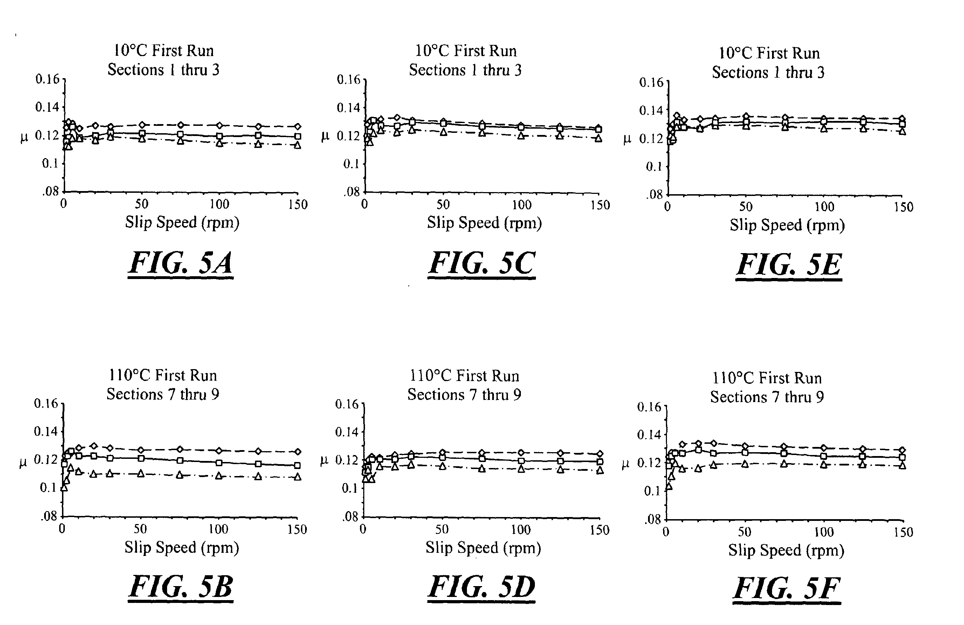

Referring now to FIGS. 5A-5F, comparative evaluations were conducted with friction materials including fibers without a friction modifying component (FIGS. 5A-5B), fibers with silicon carbide as the friction modifying component (FIGS. 5C-5F). The amount of silicon carbide in the fibers in FIGS. 5E-5F was less than 2 weight percent of the fiber including a carbon core and a carbonized layer thereon. The amount of silicon carbide in the fibers in FIGS. 5C-5D was less than that amount contained in the fibers for the friction material utilized in the experiments associated with FIGS. 5E-5F. The friction coefficient of the materials was measured with the tests being performed at 10°C in FIGS. 5A, 5C and 5E, and at 110°C as shown in FIGS. 5B, 5D and 5F. The friction coefficient µ was measured at three different pressures, 0.5MPa (shown by the line with diamond markers), 1 MPa (shown by the line with square markers) and at 1.5 MPa (shown by the line with triangle markers). As will be appreciated from the comparison of FIGS. 5A, 5C and 5E, the increase in the amount of silicon carbide increased the friction coefficient µ and further, the addition of silicon carbide resulted in the friction coefficient being less dependent on the pressure applied. Similar results were obtained when the tests were run at 110°C as shown in FIGS. 5B, 5D, and 5F.

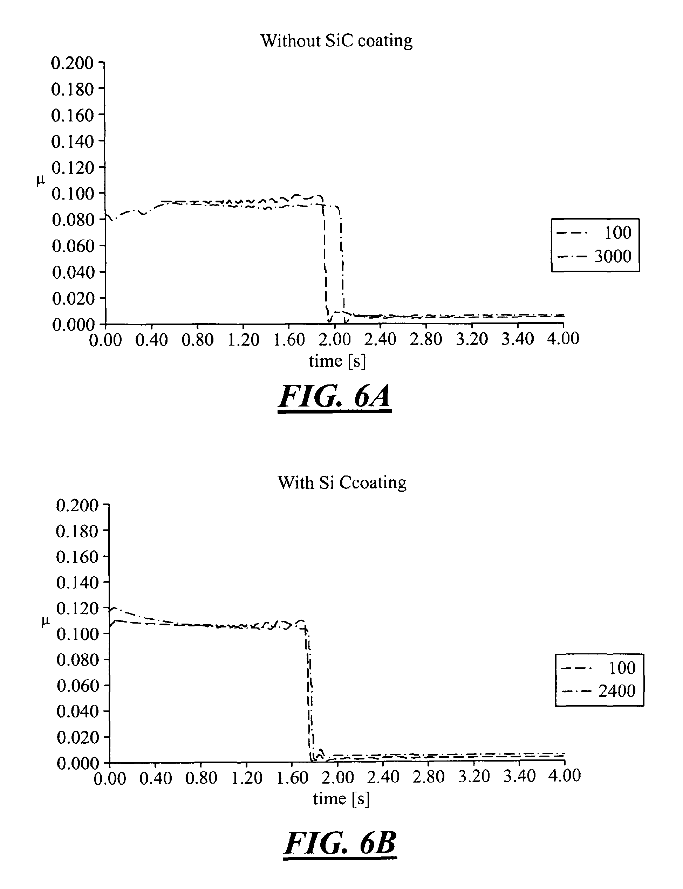

FIGS. 6A-6B are graphs of the results of durability tests conducted using reduced oil flow conducted at 100 cycles through 3,000 cycles. As will be appreciated from FIG. 6B, the addition of a friction modifying component such as silicon carbide to the fibers increase the friction coefficient µ and better friction curve.

The above description of embodiments of the invention is merely exemplary in nature and, thus, variations thereof are not to be regarded as a departure from the spirit and scope of the invention.

## Claims

1. A product comprising:
a friction material comprising a mat comprising a plurality of fibers, the fibers comprising a core and a layer thereon consisting essentially of carbon, and a friction modifying component on the layer or infiltrated into the fiber, the friction modifying component comprising at least one of a silicon component, a metal, a metal oxide or a ceramic material.

2. A product as set forth in claim 1 wherein the silicon component comprising at least one of silicon carbide, silica, silicon or other silicon-based compounds.

3. A product as set forth in claim 1 wherein the core comprises carbon.

4. A product as set forth in claim 1 wherein the silicon component comprises particles.

5. A product as set forth in claim 1 wherein the silicon component comprises a coating on the fibers.

6. A product as set forth in claim 1 wherein the silicon component is silicon carbide.

7. A product as set forth in claim 1 wherein the layer thereon consisting essentially of carbon is carbon deposited by chemical vapor deposition.

8. A product as set forth in claim 1 wherein the friction material has a porosity ranging from 60 percent to 90 percent.

9. A product as set forth in claim 1 wherein the silicon component comprises SiC or a derivative thereof.

10. A process comprising providing a plurality of fibers, the fibers comprising a core, depositing a resin and a friction modifying component on the core and carbonizing the resin to provide a mat comprising modified fibers comprising the core and a layer thereon consisting essentially of carbon, and a friction modifying component on the layer or infiltrated into the fiber, the friction modifying component comprising at least one of a silicon component, a metal, a metal oxide or a ceramic material.

11. A process as set forth in claim 10 wherein the depositing the friction modifying material is preformed separately form the depositing a resin.

12. A process as set forth in claim 10 wherein the mat comprises SiC or a derivative thereof on the layer or infiltrated into the modified fibers.

13. A process as set forth in claim 10 wherein the silicon component comprising at least one of silicon carbide, silica, silicon or other silicon-based compounds.

14. A process as set forth in claim 10 wherein the friction modifying component is present in an amount of about 0.05 to 2 percent of the total weight of the fibers with a core and a layer thereon.

15. A process as set forth in claim 10 wherein the resin comprises a phenol resin.
